# EUROPEAN PATENT APPLICATION

(11) **EP 1 536 079 A2**
(43) Date of publication of application: **01.06.2005**
(21) Application number: 04257222.2
(22) Date of filing: 22.11.2004
(51) Int. Cl.: E04D 13/03

(54) **Light directing duct**

(30) Priority: 28.11.2003 GB 0327712
(71) Applicant: Litforme Ltd, Winterbourne, Bristol BS36 1SE (GB)
(72) Inventor: Skuse, Tony, Winterbourne BS36 1SE (GB)
(74) Representative: Giles, Ashley Simon

(57) **Abstract**

A light directing duct comprising a first end portion (2) and a second end portion (4), the first end portion (2) and second end portion (4) being interconnected by a hinge (30).

## Description

This invention relates to light directing ducts, for example, as used to direct light from a skylight into a room of a building.

### BACKGROUND TO THE INVENTION

Light directing ducts, or "sun-pipes" are widely used to bring natural light into a living or working space. The sun-pipe is a tube running from the roof of the building to the ceiling of the living or working space, the inside of which is made from a light reflective material. Commonly known sun-pipes are straight tubes, running from roof to ceiling, so that the light inlet must be positioned directly above the light outlet. This necessitates the tube being cut down to fit against the slope of a roof, and means that the location one can choose to have a natural light opening in their living or work space is limited by where it is possible to make the light inlet in the roof.

US Patent Application No. 10/619753 discloses apparatus for illuminating the interior of a building.

### STATEMENT OF INVENTION

According to the present invention there is provided a light directing duct comprising a first end portion and a second end portion, the first end portion and second end portion being interconnected by a hinge.

Preferably, the hinge is provided across only one side of the duct.

Preferably, the first end portion comprises a tongue which extends into the second end portion. Most preferably, the tongue extends into the second end portion on a side of the duct opposite to the hinge. Preferably, the tongue is made from a flexible material, so that when the first end portion is rotated relative to the second end portion, the tongue is able to bend.

Preferably, the two sides of one of the end portions adjacent to the side of the duct with the hinge, comprise projections having curved guide surfaces along which the other end portion tracks.

Preferably, the internal surfaces of the duct are adapted to reflect light.
Preferably, the duct has a rectangular cross section. Most preferably, the duct has a square cross section.

Preferably, the duct is adapted for use between a skylight and a room of a building.

Preferably, the hinge comprises a living hinge. The living hinge may be formed by scoring or otherwise weakening a sheet of material along a desired hinge line. The living hinge could be made from the same material as a wall of the duct. Preferably, the living hinge is formed from flexible material attached to a wall of the duct.

### BRIEF DESCRIPTION OF THE DRAWINGS

Figure 1 is a cross section through an embodiment of the light directing duct;
Figure 2 is a cross sectional view of a first end portion, perpendicular to the view in Figure 1;
Figure 3 is a cross sectional view of a second end portion, perpendicular to the view in Figure 1;
Figure 4 is a cross section through an embodiment of the light directing duct when the first end portion is rotated about the hinge; and
Figure 5 is a 3-dimensional representation of the light directing duct with the first end portion rotated about the hinge.

### DETAILED DESCRIPTION OF PREFERRED EMBODIMENTS

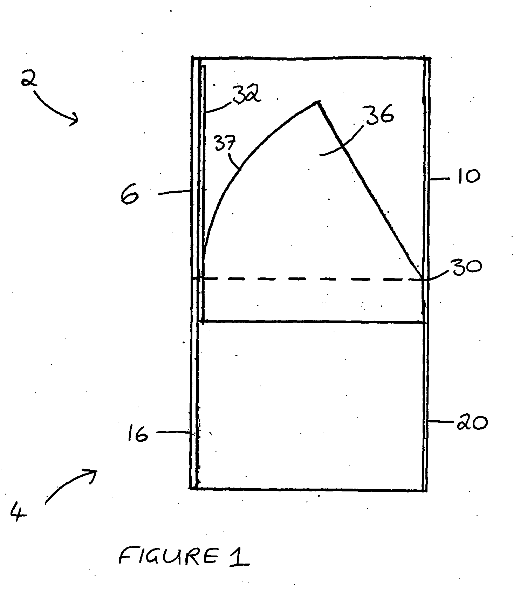

Referring to the drawings, Figures 1 to 5 show a light directing duct adapted for use between a sky light and a room of a building to bring natural light into the room. The light directing duct comprises a first end portion 2 connected to a second end portion 4 by a hinge 30. The internal surfaces of the duct are made from a light reflecting material so that light is reflected down the duct from the skylight to the room below.

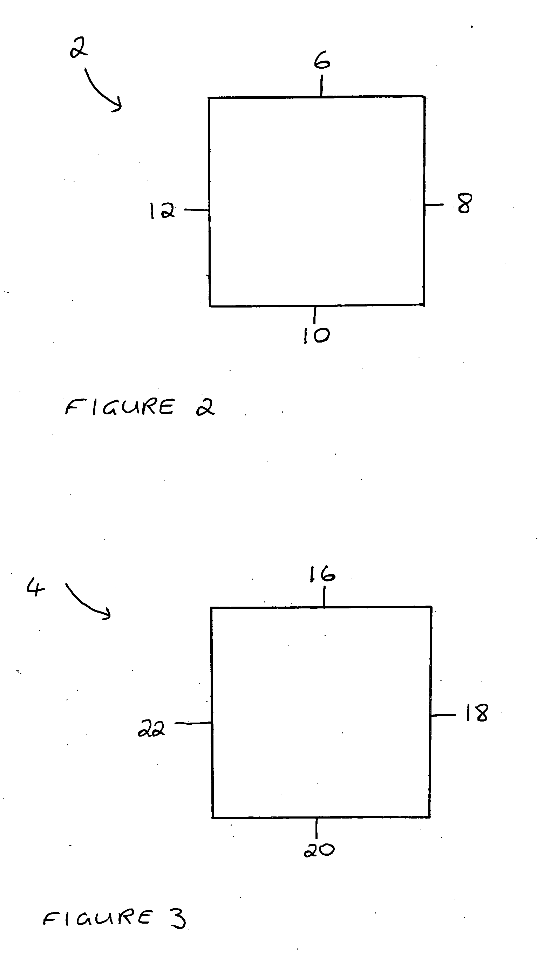

Figure 2 shows a cross section of the first end portion 2, comprising four side walls 6, 8, 10 and 12. Figure 3 shows a cross section of the second end portion comprising four side walls 16, 18, 20 and 22. The hinge 30 connects walls 10 and 20.

A tongue 32 is fixed inside wall 16 of the second end portion and projects into the first end portion adjacent to wall 6. Fixed inside wall 18 of the second end portion is a projection comprising a first guide plate 34 which projects into the first end portion adjacent to wall 8, and fixed inside wall 22 of the second portion is another projection comprising a second guide plate 36 which projects into the first end portion adjacent to wall 12. The first and second guide plates 34, 36 have the shape of a segment of a circle, centred on hinge 30 such that the edges 35, 37 of the first and second guide plates adjacent to the tongue 32 are curved.

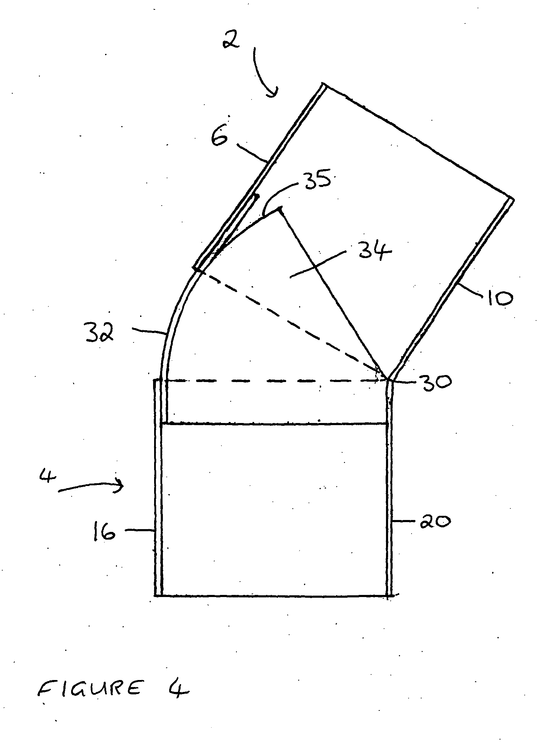

Referring to Figure 4, if the first end portion 2 is pivoted about the hinge 30, the wall 6 of the first end portion of the duct rides up the tongue 32 and the curved edges 35, 37 of the first and second guide plates 34, 36, so that the duct becomes bent. The degree of the bend can be adjusted to match the pitch of the roof to which the duct is to be fitted. To install the duct, the second end portion 4 can be fitted first, and then the first end portion can be rotated about the hinge until the first end portion 2 abuts the roof evenly.

As mentioned above, as the first end portion 2 is rotated about the hinge 30, the wall 6, opposites the hinge, rides up the tongue 32, which is fixed to the wall 16 of the second end portion 4, and slides against the inside of wall 6. The tongue 32 is preferably made of a flexible material. The tongue is thus able to bend to seal off the gap between walls 6 and 16. Similarly, the first and second guide plates serve to seal off the gap between walls 8 and 18 and 12 and 22 respectively, as the first end portion 2 pivots relative to the second end portion 4 about the hinge 30.
Such an arrangement ensures that no region is left uncovered when the duct is bent about the hinge and so little or no light is lost into the roof space.

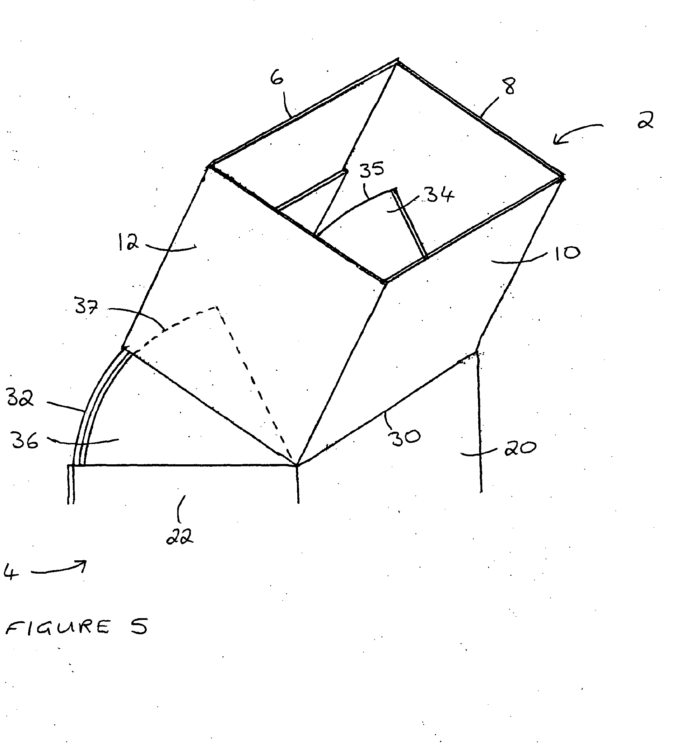

Figure 5 shows a 3-dimensional representation of the light directing duct in the bent position. Clearly shown are the tongue 32 bending with the first end portion 2 and the guide plates 34 and 36 guiding the tongue.

The hinge 30 may comprise a living hinge. This may be formed from the same material as the sides of the duct, or may be formed from a flexible material such as duct tape attached to the side of the duct.

## Claims

1. A light directing duct comprising a first end portion and a second end portion, the first end portion and second end portion being interconnected by a hinge.

2. A light directing duct as claimed in claim 1, wherein the hinge is provided across one side only of the duct.

3. A light directing duct as claimed in claim 1 or 2, wherein the second end portion comprises a tongue which extends into the first end portion.

4. A light directing duct as claimed in claim 3, when appendant to claim 2, wherein the tongue extends into the first end portion on a side of the duct opposite to the hinge.

5. A light directing duct as claimed in claim 3 or 4, wherein the tongue is flexible so that it can bend as the first end portion of the duct is rotated relative to the second end portion.

6. A light directing duct as claimed in claim 5, wherein the two sides of one of the end portions adjacent to the side of the duct with the hinge comprise projections having curved guide surfaces along which the other end portion tracks.

7. A light directing duct as claimed in any one of the preceding claims, wherein the internal surfaces of the duct are adapted to reflect light.

8. A light directing duct as claimed in any one of the preceding claims, wherein the duct has a rectangular cross-section.

9. A light directing duct as claimed in claim 8, wherein the duct has a square cross section.

10. A light directing duct as claimed in any one of the preceding claims, wherein the duct is adapted for use between a skylight and a room of a building.

11. A light directing duct as claimed in any one of the preceding claims wherein the hinge comprises a living hinge.

12. A light directing duct as claimed in claim 11, wherein the living hinge is formed from flexible material attached to a wall of the duct.
